# EUROPEAN PATENT SPECIFICATION

(11) **EP 4 357 103 B1**
(45) Date of publication and mention of the grant of the patent: **22.10.2025**
(21) Application number: 23203755.6
(22) Date of filing: 16.10.2023
(51) Int. Cl.: B29C 44/58, B29C 33/42, B29C 33/04, B29C 33/38, B29C 44/34, B29C 44/44, B29K 23/00, B29K 25/00, B29K 75/00

(54) **MOLD FOR MOLDING PARTS MADE OF THERMOPLASTIC MATERIAL**
FORM ZUM FORMEN VON TEILEN AUS THERMOPLASTISCHEM MATERIAL
MOULE POUR LE MOULAGE DE PIÈCES EN MATIÈRE THERMOPLASTIQUE

(30) Priority: 18.10.2022 PT 2022118263
(43) Date of publication of application: 24.04.2024
(73) Proprietor: Olmedo Tejedor Lda., 4950-298 Mazedo (PT)
(72) Inventor: RODA BARBOSA, Alexandre, 4930-013 Valença (PT)
(74) Representative: Pereira Garcia, João Luís

(56) References cited:
- WO-A1-2014/140406
- DE-A1- 102007 022 327
- DK-U3- 202 300 075
- US-A- 4 181 287
- US-A1- 2018 215 084

## Description

### Technical Field

The present invention belongs to the field of manufacture by molding parts made of thermoplastic material. In particular, the invention relates to low energy consumption molds for molding parts made of thermoplastic material.

### State of the Art

In the current state of the art, commercial molding machines for thermoplastic material consist of two steam chambers wherein each half of mold is housed. Each half of mold is installed in one of these chambers in such a way that there is a sealed inner volume, dedicated to the passage of fluids involved in the molding process, which, generally speaking, are: air for demolding, water for cooling the molded part, steam to provide the energy sintering the particles into foam.

These chambers are generally too bulky to be able to mold large parts and, in most cases, do not fit to the dimensions of the parts.

Some machines can be optimized using specific chambers for each mold. In this case, the molds include the steam chamber itself and what they include are holes for connecting the energies (air, water and steam). The molds have small holes throughout the mold surface that are sized so that the foamed particle does not leak out, but water vapor passes through them. When the water vapor passes through the mold from one chamber to another, it provides the foamed particles with energy which produces the sintering of the particles. This is one of the most energy-inefficient production processes in current industry, since less than 10 % of the steam consumed is used to sinter the particles and form the molded part.

Currently, mold cavities are made of aluminum, with thicknesses between 10 and 15 mm, depending on the steam pressure required to sinter particles of the material to be molded. In addition to the cavities, in order to form the seal in the machine chamber, an aluminum structure is also generally made, which consists of plates and supports that ensure correct installation on the molding machine, and also the structural stability of the cavities preventing deformation by the steam pressure and foam under molding conditions.

All these elements represent a considerable mass of metal which is heated and cooled in each molding cycle, leading to high energy consumption as a greater amount of steam is required to heat these elements.

It is clear that the purpose of a more efficient system that can operate with the technology of current molding machines for molding particles made of thermoplastic material must be based on the reducing the volume of the inner spaces and the mass of metal that is heated and cooled in each cycle.

In this regard, a mold was developed that aims to optimize steam consumption, minimizing the mass of steam used per volume and metal mass of a mold.

Patent no. ES 2495640 B1 discloses a mold for producing a plastic foam part, comprising at least a first cavity supported in a first chamber of a molding machine, at least one second cavity supported in a second chamber of the molding machine, a space corresponding to the part to be molded, defined between the first cavity and the second cavity in the closed position of the molding machine, and at least one first hole in the first or second cavity for introducing a plastic foam into said space.

A disadvantage of this mold is that it is only compatible with monoblock molding machines and the manufacturing process thereof implies high energy consumption.

Document US 4181287 A refers to an apparatus for molding rigid foam components comprising female and male molding components.

Therefore, there is a need to provide a mold for molding parts made of thermoplastic material that is compatible with the molding machines on the market and that the molded parts are more economically manufactured, without altering the mechanical properties of the molded parts.

### Summary of the invention

An object of the present invention is to provide a mold for molding parts made of thermoplastic material that makes it possible to overcome the aforementioned drawbacks of the prior art.

The mold of the present invention is as defined in the claims.

As used throughout this application, the term "plurality" should be understood as a quantitative concept in which at least two objects that form the present invention are present up to the limit of all possible combinations thereof.

As used throughout this application, the term "rear surface of the female 10" should be understood as the surface that faces the inner space between the female plate (1) and the back plate (2), i.e., the surface of the female (10) opposite the surface receiving the thermoplastic material.

As used throughout this application, the term "rear surface of the male (11)" should be understood as the surface of the male (11) that faces the male plate (12), i.e., the surface of the male (11) which is opposite the back plate (2) and the female plate (1).

### Description of the drawings

Other features and advantages of the present invention will be more clearly understood from the following description of its preferred and non-limiting embodiments, in which:
Fig. 1 shows a sectional view of the injection side (16).

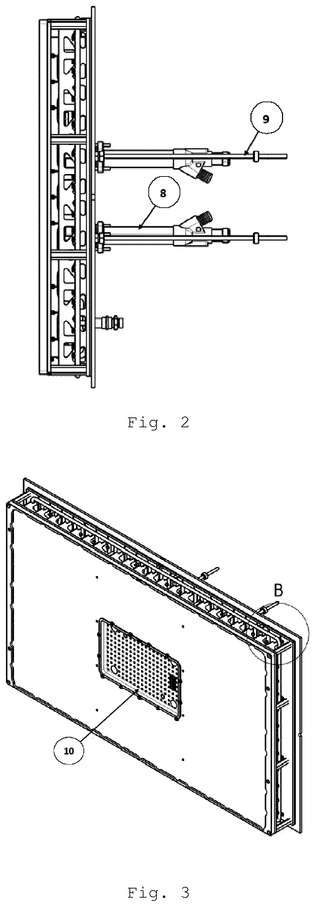

Fig. 2 shows a sectional view of an embodiment of the invention, from the injection side (16), where it is possible to see, by way of example, the injection side (16) with three females (10).
Fig. 3 shows a side view of the injection side (16).

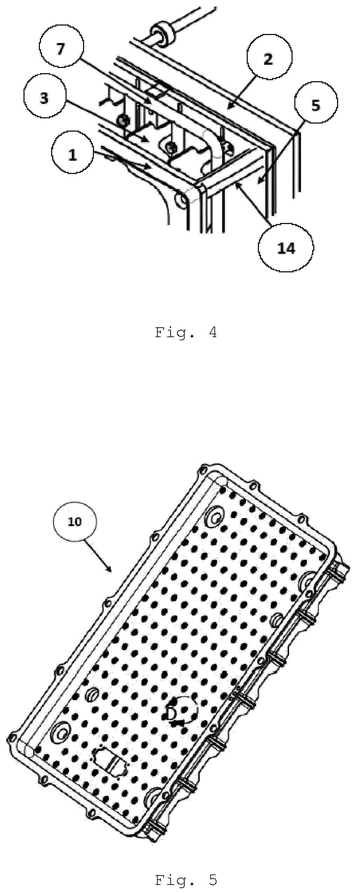

Fig. 4 shows an enlarged view of detail B, indicated in Fig. 3, where a rib (3) and support means (14) are seen.
Fig. 5 shows a perspective view of the front surface of the female (10).
Fig. 6 shows a perspective view of the rear surface of the female (10).
Fig. 7 shows an enlarged view of detail A with a scale of 1:1.5, indicated in Fig. 6, with the protrusions (13) visible.

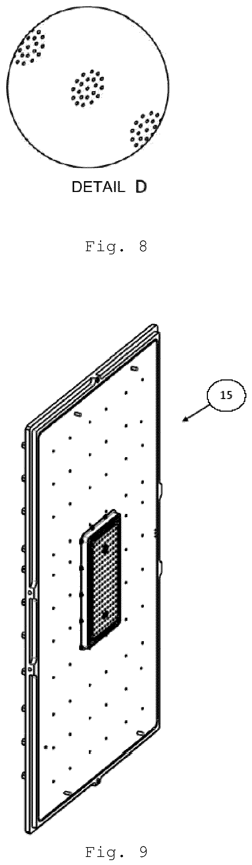

Fig. 8 shows an enlarged view of detail D with a scale of 1.5:1, indicated in Fig. 5, with the through holes (17).
Fig. 9 shows a perspective view of the non-injection side (15).

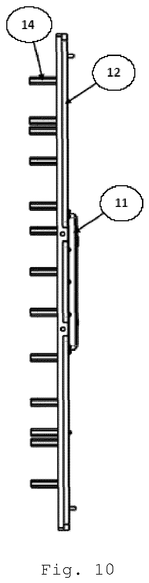

Fig. 10 shows a sectional view of the non-injection side (15), where the support means (14), the male plate (12) and the male (11) are seen.

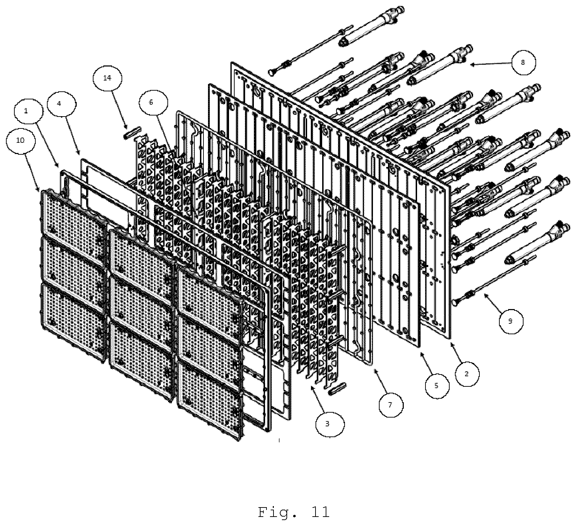

Fig. 11 shows an exploded view of the injection side (16).
Fig. 12 shows a side view in which a number of ribs (3) abutting on the rear surface of a female (10) is seen.
Fig. 13 shows a perspective view of the mold in the closed configuration.

### Detailed Description of the Invention

As described above, the prior art solutions have some disadvantages.

In particular, to date there are no known reliable and effective solutions in terms of lower energy consumption that ensure compatibility of a mold to existing molding machines on the market, ensuring that the molded parts retain their final properties, both in terms of resistance and in terms of durability.

The mold of the present invention comprises a non-injection side (15) abutting a molding machine, comprising support means (14) fixed to the male plate (12) and is configured to move to an injection side (16) and abuts said injection side (16), so that at least one male (11), integrated into the non-injection side (15), is inserted into at least one female (10), integrated into the injection side (16), wherein the at least one male (11) and at least one female (10) delimit at least one molding space suitable for receiving thermoplastic material so that at least one part to be molded is formed.

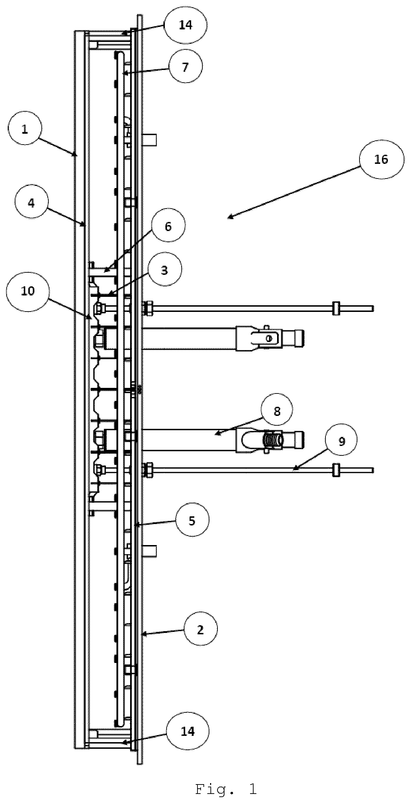

Fig. 1 shows the injection side (16) comprising a female plate (1) opposite a back plate (2), said plates (1,2) being connected to each other by at least one reinforcing element (6) and support means (14), in order to delimit the inner space between the female plate (1) and the back plate (2). The injection side (16) has at least one female (1) which further comprises a plurality of protrusions (13), parallel to each other and transversal to each other, which may be equidistant from each other, arranged on the rear surface of the female (10), the plurality of protrusions (13) abuts a plurality of ribs (3) parallel to each other, which may be equidistant from each other. The plurality of protrusions (13) is interposed between the rear surface of the female (10) and the plurality of ribs (3). Furthermore, the injection side (16) includes at least one injector (8), at least one ejector (9) and at least one coil (7).

The number of injectors (8), ejectors (9) and coils (7) integrated in the mold of the present invention varies depending on the complexity of the at least one part to be molded.

In the case of a complex part, for example, a lining for a boiler, or a bumper for a car, there may be 2, 3, 4 or more injectors (8), 2, 3, 4 or more ejectors (9) or 2, 3, 4 or more coils (7) integrated into the injection side (16) of the mold for, for example, a molding space where the part will be molded.

The female plate (1) has at least one female (10) connected to itself by connecting means, wherein the at least one female (10) is suitable for receiving at least one male (11), which is inserted into the said at least one female (10).

The back plate (2) is used to close the injection side (16) in the molding machine, in order to obtain a sealed space between the female plate (1) and the back plate (2), the entire area between them is sealed when assembled in a machine.

The back plate (2) and the female plate (1) may have a thermal insulation on their surfaces that face the inner space, i.e., the space between the two plates (1,2).

The water used to cool the at least one molded part and the molding space circulates in the at least one coil (7), arranged on the injection side (16) and contacts said molded part and the molding space by through holes (17).

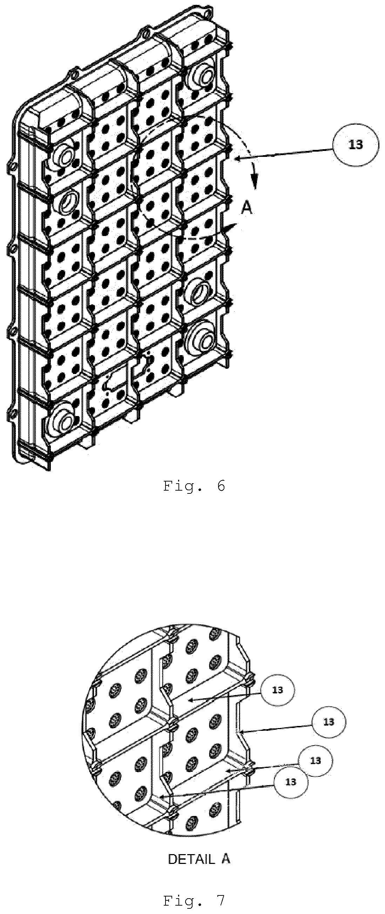

The female (10) and the male (11) include a plurality of through holes (17), such that these holes (17) allow the passage of steam to the female (10) and the male (11) so as to soften the thermoplastic material granules therein and thus the sintering step of said material occurs, and also allow the passage of cooling water to the female (10) to cool at least one molded part at the end of the molding cycle, Figs. 6 and 7. The diameter of these through holes (17) is smaller than the diameter of the thermoplastic material granules in order to prevent the granules from being released out of the female (10) and out of the male (11). The holes (17) can have any diameter, as long as it is smaller than the diameter of the thermoplastic material granules. The diameter of the holes (17) varies from 0.6 - 1 mm. It can also vary from 0.7 - 0.9 mm. In an embodiment, the diameter is 0.8 mm.

The thermoplastic material granules are passed through the injector (8) to inject them into the molding space, which corresponds to the space between the at least one female (10) and the at least one male (11), in order to manufacture at least one molded part.

The support means (14) connect the female plate (1) to the back plate (2) and prevent the at least one molded part from mechanical and structural deformations. In an embodiment, the support means (14) have one of the following shapes: triangular, square, circular, hexagonal.

In a preferred embodiment of the invention, the support means (14) have a hexagonal shape, since they allow the female plate (1) and the back plate (2) to be more rigid and supported when are connected to each other.

The reinforcement elements (6) connecting the female plate (1) to the back plate (2) also are used as reinforcement for the female plate (1) and the back plate (2), preventing it from deforming with internal pressure values to which the mold is subjected during the molding process.

The female (10) has a plurality of protrusions (13) which are arranged on the rear surface of said female (10), facing the inner space between the female plate (1) and the back plate (2), in which the protrusions (13) are arranged parallel to each other and transversal to each other, as seen in Fig. 7. The protrusions (13) are arranged parallel and perpendicular on the rear surface of the female (10).

On the plurality of protrusions (13) parallel and transverse to each other, there is additionally abutted a plurality of ribs (3) parallel to each other, which may be arranged equidistant from each other. The ribs (3) are 2 - 5 mm thick.

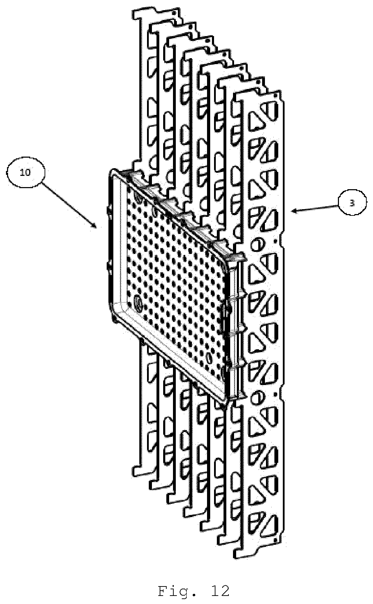

The ribs (3) and the protrusions (13) ensure that the female (10) is reinforced to resist the working pressure conditions without suffering structural damage to the female (10) itself during the molding process. The ribs (3) are arranged transversely on the rear surface of the female (10), see Fig. 12.

The cooperation between the ribs (3) and the protrusions (13) of the female (10) with the protrusions (13) of the male (11) ensures support and reinforcement in the structures of the female (10) and male (11), which allows that the thickness of the wall of the female (10) and the male (11) may be lower than the thickness of known females and males, besides allowing to obtain females (10) and males (11) of a lighter weight, when compared with known ones.

If there were only a reduction in the thickness of the wall of the female (1) without the existence of the protrusions (13) and ribs (3), it would undergo deformations in its structure, damaging it, which would lead, at the limit, to its breakage due to the pressure values normally used in this type of molding processes.

If there were only a reduction in the thickness of the wall of the male (11) without the existence of the protrusions (13), it would undergo deformations in its structure, damaging it, which would lead, at the limit, to its breakage due to the pressure values normally used in this type of molding processes.

Thus, by the cooperation between the ribs (3) and the protrusions (13), it is possible to obtain a reduction in the thickness of the wall of the female (1) and the male (11). With the solution provided by the present invention, it is possible to obtain molds in which the wall thickness of the female (1) and the male (11) is 2 - 5 mm, depending on the pressure conditions used and the type of thermoplastic material used. This makes possible to reduce the energy consumption of the molding process because the amount of steam required to manufacture molded parts is lower than that of known molding processes.

The male (11) also has a plurality of protrusions (13) on its rear surface. These protrusions (13), parallel to each other and perpendicular to each other, abut the male plate (12), allowing that when the male (11) abuts the male plate (12), the protrusions (13) abut the male plate (12), resulting in better resistance and support of the male (11). In this way, it is not necessary for the male plate (12) to have ribs (3) abutted to the protrusions (13). Also in this case, the presence of the protrusions (13) allows the male (11) to be reinforced to withstand the working pressure conditions without structural damage to the male (11) during the molding process.

Another aspect disclosed refers to the fact that there is only one inner space between the female plate (1) and the back plate (2) on the injection side (16), the dimensions of this inner space being adapted to the dimensions and/or number of females (10) and the other elements that make up said injection side (16). In other words, the inner space of the injection plate (16) is tailored to the needs of the producer of the molded parts, i.e., its dimensions are adjusted based on the number and size of females (10), eliminating the need for a separate inner space for each female (10).

It is only necessary that the dimensions of the female plate (1), the back plate (2), and the distance between these plates (1,2) with the male plate (12) have standard dimensions known to those skilled in the art, and for this reason, they will not be specified in this disclosure, allowing for the attachment of these plates (1,2) to any molding machine. The same type of tailoring can be carried out on the male plate (12), so that the at least one male (11) can be inserted into the at least one female (10).

The mold has a mass greater than at least the mass of document ES 2495640 B1 due to the existence of the protrusions (13) and the ribs (3). However, despite the greater mass of the present mold, it is compatible with any molding machine currently available on the market, which provides greater versatility compared to the mold, for example, in document ES 2495640 B1.

The mold, object of the present invention, is manufactured using a software design suitable for that purpose and known by the person skilled in the art, based on the shape of the at least one part to be molded. The software is CAD.

The male (11) and the female (10) are obtained by machining a solid block of material or a casting or 3D printing part.

The plurality of protrusions (13) is made to abut at least one female (10) and at least one male (11) at a distance, for example, of 50 - 80 mm, between each two protrusions (13) and the plurality of ribs (3) is made to abut on said protrusions (13), longitudinally or transversely, directly connecting to the back plate (2), remaining in contact with latter.

In an embodiment, the distance between every two protrusions (13) is, by way of example, 50 mm, 60 mm, 70 mm, 80 mm, 90 mm.

The thermoplastic material used to mold the at least one molded part is chosen from: polyethylene, polystyrene, polypropylene, expanded polystyrene, expanded polypropylene.

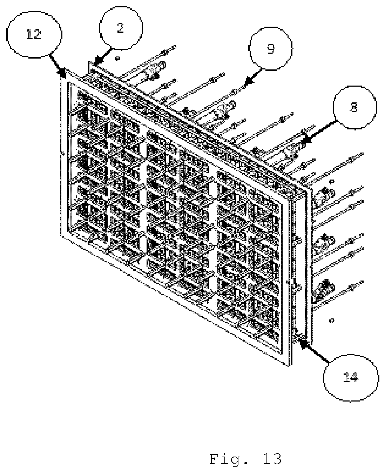

When each male (11) is inserted into each female (10), a molding space is formed, in which the thermoplastic material will be sintered to shape the at least one molded part. Fig. 13 shows a view of the mold in its closed configuration, i.e., the injection side (16) and the non-injection side (15) are abutting so that the molding cycle can take place, resulting in the molded part.

Both the male (11) and the female (10) are made of any material, provided that the required structural and temperature requirements to withstand a molding cycle are met. In a preferred embodiment, they are made of aluminum, stainless steel, titanium, brass.

At the end of the molding cycle, the at least one molded part is released from the molding space, delimited by the female (10) and the male (11), where it underwent the molding cycle, through at least one ejector (9).

The non-injection side (15) comprises a male plate (12), which includes support means (14) and at least one male (11), the male (11) being configured to be inserted into the at least one female (10), arranged on the injection side (16).

In an embodiment of the present invention, the ribs (3) are longitudinally or transversely arranged on the rear surface of the female (10).

In an embodiment of the present invention, the male (11) has a plurality of protrusions (13) longitudinally or transversely arranged on the rear surface of said male (11).

Next, by way of example, the main steps of a thermoplastic material molding process are described:
a) closing the mold by means of abutting between the non-injection side (15) and the injection side (16) by inserting at least one male (11) into at least one female (10) and injecting the thermoplastic material at room temperature into at least one female (10), through at least one injector (8);
b) injecting steam through the upper area of the injection side (16) and the non-injection side (15) at a pressure value between 0.5 - 4 bar and a temperature of 50 to 130°C and subsequent steam exit through the lower area of the injection side (16) and non-injection side (15), thereby eliminating the air present in the inner spaces;
c) exchanging steam from the injection side (16) to the non-injection side (15) in order to sinter the material, and after this process, pressure increases on both injection (16) and non-injection (15) sides in order to give surface finish to the at least one molded part;
d) cooling the at least one molded part to room temperature, by spraying water through the through holes (17) in the female (10) and the male (11);
e) opening the mold by separating the injection side (16) and the non-injection side (15) and expelling the at least one molded part with the aid of at least one ejector (9).

By using the mold of the present invention, it is possible to obtain any molded parts, such as shoe soles, automotive components, such as bumpers, containers used in the food industry, building materials, coating and home building. All parts currently manufactured from polyethylene, polystyrene, or polypropylene materials can be manufactured using the mold of the present invention.

The subject matter described above is provided as an illustration of the present invention and therefore should not be construed as limiting it. The terminology used for the purpose of describing preferred embodiments of the present invention should not be restricted thereto.

## Claims

1. A mold for molding at least one part made of thermoplastic material wherein it comprises:
a) a non-injection side (15) and an injection side (16), wherein the non-injection side (15) is suitable for abutting to a molding machine, and is configured to move to the injection side (16) and to abut said injection side (16), such that at least one male (11), being integrated in the non-injection side (15), is inserted into at least one female (10), integrated in the injection side (16), the at least one male (11), and the at least one female (10) defining at least one molding space, suitable for receiving thermoplastic material to be molded;
b) the injection side (16) comprises a female plate (1) opposite a back plate (2), said plates (1,2) being connected to each other by at least one reinforcing element (6) and support means (14), in order to delimit the inner free space between the female and back plates (1,2);
c) the non-injection side (15) comprises a male plate (12), which includes support means (14) and the at least one male (11), the at least one male (11) has one wall; **characterized in that**
d) the at least one female (10) has one wall, further comprises a plurality of protrusions (13) parallel to each other and perpendicular to each other, abutting a rear surface of the female (10), opposite the surface receiving the thermoplastic material, and a plurality of ribs (3) parallel to each other, abutting the plurality of protrusions (13), wherein the plurality of protrusions (13) is interposed between the rear surface of the at least one female (10) and the plurality of ribs (3), and wherein the wall thickness of the at least one female (10) is 2-5 mm;
e) the at least one male (11) further comprises a plurality of protrusions (13) parallel to each other and perpendicular to each other, arranged on the rear surface of the male (11) and wherein the wall thickness of the at least one male (11) is 2-5 mm.

2. The mold according to claim 1, wherein the plurality of protrusions (13) and the plurality of ribs (3) are equidistant from each other.

3. The mold according to the preceding claims, wherein the ribs (3) are longitudinally or transversely abutting the rear surface of the female (10).

4. The mold according to the preceding claims, wherein the ribs (3) are 2 - 5 mm thick.

5. The mold according to the preceding claims, wherein the injection side (16) includes at least one injector (8).

6. The mold according to the preceding claims, wherein the injection side (16) includes at least one ejector (9).

7. The mold according to the preceding claims, wherein the injection side (16) includes at least one coil (7).

8. The mold according to the preceding claims, wherein the female plate (1) has thermal insulation on the surface facing the inner space between the female and back plates (1,2).

9. The mold according to the preceding claims, wherein the back plate (2) has thermal insulation on the surface facing the inner space between the female and back plates (1,2).

10. The mold according to the preceding claims, wherein the female (10) and the male (11) include a plurality of through holes (17).

11. The mold according to the preceding claims, wherein the support means (14) have one of the following shapes: triangular, square, circular, hexagonal.

12. The mold according to claim 11, wherein the support means (14) have a hexagonal shape.

13. The mold according to the preceding claims, wherein the mold is made of aluminum, stainless steel, titanium, brass.

14. The mold according to the preceding claims, wherein the thermoplastic material is chosen from: polyethylene, polystyrene, polypropylene, expanded polystyrene, expanded polypropylene.

15. The mold according to the preceding claims, wherein each female (10) and each male (11) are made of aluminum or aluminum alloy.

## Patentansprüche

1. Form zum Formen von mindestens einem Teil, das aus einem thermoplastischen Material hergestellt ist, wobei sie Folgendes umfasst:
a) eine Nicht-Einspritzseite (15) und eine Einspritzseite (16), wobei die Nicht-Einspritzseite (15) geeignet ist, an einer Formmaschine anzuliegen, und dazu konfiguriert ist, sich zur Einspritzseite (16) zu bewegen und an der Einspritzseite (16) anzuliegen, so dass mindestens eine Patrize (11), die in die Nicht-Einspritzseite (15) integriert ist, in mindestens eine Matrize (10) eingeführt wird, die in die Einspritzseite (16) integriert ist, wobei die mindestens eine Patrize (11) und die mindestens eine Matrize (10) mindestens einen Formungsraum definieren, der geeignet ist, thermoplastisches Material zu empfangen, das geformt werden soll;
b) wobei die Einspritzseite (16) eine Matrizenplatte (1) gegenüber einer Rückplatte (2) umfasst, wobei die Platten (1, 2) durch mindestens ein Verstärkungselement (6) und Trägermittel (14) miteinander verbunden sind, um den inneren Freiraum zwischen der Matrizen- und Rückplatte (1, 2) zu begrenzen;
c) die Nicht-Einspritzseite (15) eine Patrizenplatte (12) umfasst, die Trägermittel (14) und die mindestens eine Patrize (11) beinhaltet, wobei die mindestens eine Patrize (11) eine Wand aufweist; **dadurch gekennzeichnet, dass**
d) die mindestens eine Matrize (10) eine Wand aufweist, ferner eine Vielzahl von Vorsprüngen (13) umfasst, die parallel zueinander und senkrecht zueinander verlaufen und an einer hinteren Oberfläche der Matrize (10) anliegen, die der das thermoplastische Material empfangenden Oberfläche gegenüberliegt, sowie eine Vielzahl von Rippen (3), die parallel zueinander verlaufen, die an der Vielzahl von Vorsprüngen (13) anliegen, wobei die Vielzahl von Vorsprüngen (13) zwischen der hinteren Oberfläche der mindestens einen Matrize (10) und der Vielzahl von Rippen (3) angeordnet ist, und wobei die Wandstärke der mindestens einen Matrize (10) 2-5 mm beträgt;
e) die mindestens eine Patrize (11) ferner eine Vielzahl von Vorsprüngen (13) umfasst, die parallel zueinander und senkrecht zueinander verlaufen und auf der hinteren Oberfläche der Patrize (11) angeordnet sind, und wobei die Wandstärke der mindestens einen Patrize (11) 2-5 mm beträgt.

2. Form nach Anspruch 1, wobei die Vielzahl von Vorsprüngen (13) und die Vielzahl von Rippen (3) äquidistant zueinander sind.

3. Form nach den vorhergehenden Ansprüchen, wobei die Rippen (3) in Längs- oder Querrichtung an der hinteren Oberfläche der Matrize (10) anliegen.

4. Form nach den vorhergehenden Ansprüchen, wobei die Rippen (3) 2-5 mm dick sind.

5. Form nach den vorhergehenden Ansprüchen, wobei die Einspritzseite (16) mindestens einen Injektor (8) beinhaltet.

6. Form nach den vorhergehenden Ansprüchen, wobei die Einspritzseite (16) mindestens einen Auswerfer (9) beinhaltet.

7. Form nach den vorhergehenden Ansprüchen, wobei die Einspritzseite (16) mindestens eine Spule (7) beinhaltet.

8. Form nach den vorhergehenden Ansprüchen, wobei die Matrizenplatte (1) auf der dem Innenraum zwischen Matrizen- und Rückplatte (1, 2) zugewandten Oberfläche eine Wärmeisolierung aufweist.

9. Form nach den vorhergehenden Ansprüchen, wobei die Rückplatte (2) auf der dem Innenraum zwischen Matrizen- und Rückenplatte (1, 2) zugewandten Oberfläche eine Wärmeisolierung aufweist.

10. Form nach den vorhergehenden Ansprüchen, wobei die Matrize (10) und die Patrize (11) eine Vielzahl von Durchgangslöchern (17) beinhalten.

11. Form nach den vorhergehenden Ansprüchen, wobei die Trägermittel (14) eine der folgenden Formen aufweisen: dreieckig, quadratisch, kreisförmig, sechseckig.

12. Form nach Anspruch 11, wobei die Trägermittel (14) eine sechseckige Form aufweisen.

13. Form nach den vorhergehenden Ansprüchen, wobei die Form aus Aluminium, rostfreiem Stahl, Titan oder Messing hergestellt ist.

14. Form nach den vorhergehenden Ansprüchen, wobei das thermoplastische Material ausgewählt ist aus: Polyethylen, Polystyrol, Polypropylen, expandiertem Polystyrol, expandiertem Polypropylen.

15. Form nach den vorhergehenden Ansprüchen, wobei jede Matrize (10) und jede Patrize (11) aus Aluminium oder einer Aluminiumlegierung hergestellt sind.

## Revendications

1. Moule permettant le moulage d'au moins une pièce en matière thermoplastique dans lequel il comprend :
a) un côté sans injection (15) et un côté avec injection (16), dans lequel le côté sans injection (15) est approprié pour une mise en butée contre une machine de moulage, et est configuré pour se déplacer vers le côté avec injection (16) et pour venir en butée contre ledit côté avec injection (16), de telle sorte qu'au moins une portion mâle (11), étant intégrée dans le côté sans injection (15), est insérée dans au moins une portion femelle (10), intégrée dans le côté avec injection (16), l'au moins une portion mâle (11), et l'au moins une portion femelle (10) définissant au moins un espace de moulage, approprié pour la réception d'un matériau thermoplastique à mouler ;
b) le côté avec injection (16) comprend une plaque femelle (1) en regard d'une plaque arrière (2), lesdites plaques (1, 2) étant reliées entre elles par au moins un élément de renforcement (6) et des moyens de support (14), dans le but de délimiter l'espace libre interne entre les plaques femelle et arrière (1,2) ;
c) le côté sans injection (15) comprend une plaque mâle (12), qui comporte des moyens de support (14) et l'au moins une portion mâle (11), l'au moins une portion mâle (11) a une paroi ; **caractérisé en ce que**
d) l'au moins une portion femelle (10) a une paroi, comprend en outre une pluralité de saillies (13) parallèles entre elles et perpendiculaires entre elles, en butée contre la surface arrière de la portion femelle (10), en regard de la surface recevant le matériau thermoplastique, et une pluralité de nervures (3) parallèles entre elles, en butée contre la pluralité de saillies (13), dans lequel la pluralité de saillies (13) est interposée entre la surface arrière de l'au moins une portion femelle (10) et la pluralité de nervures (3), et dans lequel l'épaisseur de paroi de l'au moins une portion femelle (10) est de 2 à 5 mm ;
e) l'au moins une portion mâle (11) comprend en outre une pluralité de saillies (13) parallèles entre elles et perpendiculaires entre elles, disposées sur la surface arrière de la portion mâle (11) et dans lequel l'épaisseur de paroi de l'au moins une portion mâle (11) est de 2 à 5 mm.

2. Moule selon la revendication 1, dans lequel la pluralité de saillies (13) et la pluralité de nervures (3) sont équidistantes l'une de l'autre.

3. Moule selon les revendications précédentes, dans lequel les nervures (3) sont en butée de manière longitudinale ou transversale contre la surface arrière de la portion femelle (10).

4. Moule selon les revendications précédentes, dans lequel les nervures (3) ont une épaisseur de 2 à 5 mm.

5. Moule selon les revendications précédentes, dans lequel le côté avec injection (16) comporte au moins un injecteur (8).

6. Moule selon les revendications précédentes, dans lequel le côté avec injection (16) comporte au moins un éjecteur (9).

7. Moule selon les revendications précédentes, dans lequel le côté avec injection (16) comporte au moins un enroulement (7).

8. Moule selon les revendications précédentes, dans lequel la plaque femelle (1) a une isolation thermique sur la surface faisant face à l'espace interne entre les plaques femelle et arrière (1,2).

9. Moule selon les revendications précédentes, dans lequel la plaque arrière (2) a une isolation thermique sur la surface faisant face à l'espace interne entre les plaques femelle et arrière (1,2).

10. Moule selon les revendications précédentes, dans lequel la portion femelle (10) et la portion mâle (11) comportent une pluralité de trous de passage (17).

11. Moule selon les revendications précédentes, dans lequel les moyens de support (14) ont l'une des formes suivantes : triangulaire, carrée, circulaire, hexagonale.

12. Moule selon la revendication 11, dans lequel les moyens de support (14) ont une forme hexagonale.

13. Moule selon les revendications précédentes, dans lequel le moule est en aluminium, acier inoxydable, titane, laiton.

14. Moule selon les revendications précédentes, dans lequel le matériau thermoplastique est choisi parmi : polyéthylène, polystyrène, polypropylène, polystyrène expansé, polypropylène expansé.

15. Moule selon les revendications précédentes, dans lequel chaque portion femelle (10) et chaque portion mâle (11) sont en aluminium ou alliage d'aluminium.
